# FASCICULE DE BREVET EUROPEEN

(11) **EP 1 807 610 B1**
(45) Date de publication et mention de la délivrance du brevet: **19.12.2007**
(21) Numéro de dépôt: 05778193.2
(22) Date de dépôt: 22.06.2005
(51) Int. Cl.: F01N 3/021, F02D 41/02, F02D 41/40, F01N 9/00, F01N 3/023, B01D 53/04

(54) **SYSTÈME D'AIDE À LA RÉGÉNÉRATION DE MOYENS DE DÉPOLLUTION POUR MOTEUR DE VÉHICULE AUTOMOBILE**
VORRICHTUNG ZUR REGENERIERUNG EINES IN EINE ABGASANLAGE EINER BRENNKRAFTMASCHINE EINES KRAFTFAHRZEUGS INTEGRIERTEN ABGASBEHANDLUNGSSYSTEMS
SYSTEM FOR ASSISTING THE REGENERATION OF DEPOLLUTION MEANS FOR A MOTOR VEHICLE ENGINE

(30) Priorité: 23.06.2004 FR 0406866
(43) Date de publication de la demande: 18.07.2007
(73) Titulaire: PEUGEOT CITROËN AUTOMOBILES S.A., 78140 Velizy Villacoublay (FR)
(72) Inventeur: COLIGNON, Christophe, F-92300 LEVALLOIS PERRET (FR)
(74) Mandataire: Pinchon, Odile
(86) Numéro de dépôt international: PCT/FR2005/050478
(87) Numéro de publication internationale: WO 2006/005876

(56) Documents cités:
- EP-A- 1 134 397
- EP-A- 1 281 843
- US-A- 4 665 690
- US-A1- 2003 131 592

## Description

La présente invention concerne un système d'aide à la régénération de moyens de dépollution intégrés dans une ligne d'échappement d'un moteur Diesel de véhicule automobile.

Plus particulièrement, l'invention se rapporte à un tel système dans lequel le moteur est associé à des moyens à rampe commune d'alimentation en carburant de cylindres de celui-ci, selon au moins une post-injection.

Une telle post-injection est, de façon classique, une injection de carburant après le point mort haut du cylindre considéré.

Ces moyens d'alimentation sont adaptés pour mettre en oeuvre, à isocouple, par modification de paramètres de contrôle de fonctionnement du moteur, différentes stratégies de régénération permettant d'obtenir des niveaux thermiques différents dans la ligne d'échappement.

Ainsi par exemple, des moyens d'alimentation mettant en oeuvre une première stratégie de régénération selon une stratégie dite de niveau 1 et une seconde stratégie de régénération selon une stratégie dite de niveau 2 et/ou une stratégie de niveau 2 surcalibré, ont déjà été proposés. Le brevet FR 2 804 170 en est un exemple.

On sait en effet que pour assurer la régénération de moyens de dépollution tels qu'un filtre à particules, les suies piégées dans celui-ci sont brûlées grâce à la thermique fournie par le moteur et à l'exotherme réalisé par la conversion des HC et du CO sur des moyens formant catalyseur d'oxydation placés par exemple en amont du filtre à particules.

Cette combustion peut être assistée par un élément catalyseur mélangé aux suies, issu par exemple d'un additif d'aide à la régénération, mélangé au carburant d'alimentation du moteur ou bien par un catalyseur déposé directement sur les parois du filtre à particules (filtre à particules catalysé).

Plus les niveaux thermiques dans la ligne d'échappement en entrée du filtre à particules sont élevés, plus la durée de régénération du filtre est courte.

Or, en conditions de roulages critiques, comme par exemple en ville ou dans des embouteillages, les niveaux atteints à travers les stratégies d'aide à la régénération classiques du filtre à particules, peuvent se révéler insuffisants pour assurer le régénération correcte du filtre, ce qui peut se traduire par des ré générations très longues et donc très consommatrices de carburant, voire incomplètes.

Un système d'aide à la régénération d'un filtre à particules mettant en oeuvre des régénérations partielles et complètes suivant la quantité de particules contenues dans le filtre est connu, par exemple par le brevet US-A-2003/131592,

Toute stratégie d'élévation de niveaux thermiques lors de ces roulages critiques permet alors d'assurer des régénérations complètes, de réduire la surconsommation due à cette régénération du filtre à particules, et surtout d'augmenter la marge de sécurité par rapport à la fissuration ou à la casse de ces filtres.

Le but de l'invention est de proposer une telle stratégie.

A cet effet, l'invention a pour objet un système d'aide à la régénération de moyens de dépollution (1), associé à des moyens formant catalyseur d'oxydation, intégrés dans une ligne d'échappement (3) d'un moteur Diesel (4) de véhicule automobile placée en sortie du collecteur d'échappement du moteur, dans lequel le moteur (4) est associé à des moyens d'alimentation (7) à rampe commune d'injection de carburant dans les cylindres de celui-ci, selon au moins une post-injection et adaptés pour mettre en oeuvre, à isocouple, par modification de paramètres de contrôle du fonctionnement du moteur, au moins deux stratégies de régénération dont une première stratégie de régénération comportant des stratégies dites de niveau 1 et de niveau 2 et une seconde stratégie de régénération comportant des stratégies de niveau 1 et une séquence alternant des stratégies de niveau 2 et de niveau 2 surcalibré, la statégie de niveau 2 remplissant les critères suivants :
- température maximale colllecteur d'échappement =800°C
- exotherme catalyseur maximal =150°C
- température sortie catalyseur maximale =710°C
- température interne catalyseur maximale =760°C
- teneur en oxygène minimale des gaz en sortie catalyseur =3%, et la stratégie de niveau 2 surcalibré remplissant les critères suivants :
- température maximale collecteur d'échappement =830°C
- exotherme catalyseur maximal =200°C
- température sortie catalyseur maximale =730°C
- température interne catalyseur maximale =pas de valeur maximale
- teneur en oxygène minimale des gaz en sortie catalyseur =2%, permettant des niveaux thermiques différents dans la ligne d'échappement, caractérisé en ce qu'il comporte des moyens (8) de détermination du nombre de régénérations incomplètes des moyens de dépollution et des moyens (8) de comparaison de celui-ci à des valeurs de seuil prédéterminées, pour mettre en oeuvre la première stratégie de régénération pour un nombre inférieur aux valeurs de seuil ou la seconde stratégie pour un nombre supérieur aux valeurs de seuil.

Suivant d'autres caractéristiques :
- les moyens de dépollution comprennent un filtre à particules ;
- le filtre à particules est catalysé ;
- les moyens de dépollution comprennent un piège à NOx ;
- le carburant comporte un additif destiné à se déposer avec les particules auxquelles il est mélangé, sur les moyens de dépollution pour faciliter leur régénération ;
- le carburant comporte un additif formant piège à NOx ;
- les moyens de dépollution sont imprégnés avec une formulation SCR, assurant une fonction d'oxydation CO/HC ; et
- le moteur est associé à un turbocompresseur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide selon l'invention ; et
- la Fig.2 illustre le fonctionnement de celui-ci.

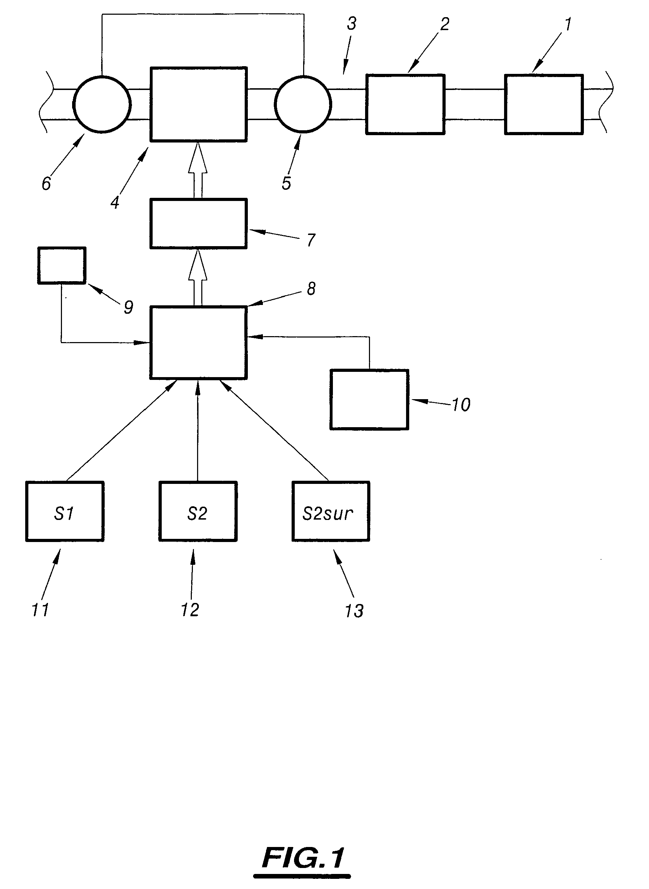

On a en effet illustré sur la figure 1, un système d'aide à la régénération de moyens de dépollution désignés par la référence générale 1, associé à des moyens formant catalyseur d'oxydation, désignés par la référence générale 2 et placés dans une ligne d'échappement 3 d'un moteur thermique tel qu'un moteur Diesel de véhicule automobile.

Ce moteur est désigné par la référence générale 4 et peut être associé par exemple à un turbocompresseur dont la portion de turbine 5 est associée à la ligne d'échappement et dont la portion de compresseur 6 est placée en amont du moteur.

Le moteur est associé à des moyens à rampe commune d'alimentation en carburant des cylindres de celui-ci, désignés par la référence générale 7, dont le fonctionnement est contrôlé par un superviseur 8.

Selon l'invention, ce système comporte également des moyens de détermination du nombre de régénérations incomplètes des moyens de dépollution et des moyens de comparaison de celui-ci à des valeurs de seuil prédéterminées, pour contrôler le fonctionnement du moteur.

Les moyens d'analyse formés par exemple par le superviseur 8, sont alors reliés à des moyens de détermination de ce nombre, désignés par la référence générale 9, délivrant celui-ci au superviseur 8, de manière à permettre à celui-ci de le comparer à des valeurs de seuil telles que délivrées par des moyens de génération 10, comprenant tous moyens appropriés permettant d'établir ces valeurs de seuil.

La détermination du nombre de régénérations incomplètes des moyens de dépollution est en effet importante.

En effet, lorsque les moyens de dépollution tels qu'un filtre à particules viennent de subir plusieurs régénérations incomplètes, que celles-ci soient partielles ou échouées, consécutives, le superviseur des moyens de dépollution estime mal la quantité de suies qui est présente dans le filtre.

En effet, il y a d'une part, une non-corrélation entre la masse de particules présente dans le filtre et les pertes de charge mesurées aux bornes du filtre à particules (ou la contre-pression mesurée en entrée du filtre) et d'autre part, une hétérogénéité spatiale de la distribution des suies dans le filtre, la périphérie du support filtrant étant souvent plus chargée que le centre.

Il est donc alors nécessaire de pouvoir assurer une régénération complète afin de réinitialiser la charge du filtre à particules avec le plus de confiance possible.

La détermination d'une régénération incomplète peut être réalisée de n'importe quelle manière appropriée déjà connue de l'état de la technique, en utilisant par exemple des moyens de cartographie, le temps passé au-dessus d'une certaine température de la ligne d'échappement, un calcul de température moyenne en entrée des moyens de dépollution lors de la tentative de régénération, un modèle mathématique de décrémentation de la masse de suies piégée dans les moyens de dépollution, dans lequel la vitesse de combustion des suies est fonction de la température des gaz, etc..

En fait, le superviseur et les moyens à rampe commune d'alimentation en carburant sont adaptés pour piloter le moteur selon différentes stratégies de régénération permettant d'obtenir des niveaux thermiques différents dans la ligne d'échappement et en particulier une première stratégie de régénération comportant des stratégies de niveau 1, S1, telle que désignée par la référence générale 11 sur cette figure 1 et de niveau 2, S2, et telle que désignée par la référence 12 sur cette figure, et une seconde stratégie de régénération comportant des stratégies de niveau 1, S1 et une séquence alternant des stratégies de niveau 2, S2, et de niveau 2 surcalibré, S2 sur, telle que désignée par la référence générale 13 sur cette figure.

En fait, dans le système selon l'invention, et en fonction des résultats de la comparaison opérée par les moyens de comparaison du nombre de régénérations incomplètes des moyens de dépollution aux valeurs de seuil prédéterminées, on met en oeuvre une stratégie de régénération selon un mode de fonctionnement en niveau 1 et en niveau 2 pour un nombre inférieur aux valeurs de seuil prédéterminées ou selon un mode de fonctionnement en niveau 1 associé à une séquence alternant des modes de fonctionnement en niveau 2 et en niveau 2 surcalibré, pour un nombre supérieur aux valeurs de seuil prédéterminées.

Ceci permet alors de maximiser les chances de réussite de la régénération notamment en conditions de roulages critiques, comme par exemple en ville ou dans des embouteillages.

A titre d'exemple, on peut passer des critères suivants pour une calibration classique d'aide à la régénération d'un filtre à particules de niveau 2 :
- température maximale collecteur d'échappement =800°C
- exotherme catalyseur maximal = 150°C
- température sortie catalyseur maximale = 710°C
- température interne catalyseur maximale = 760°C
- teneur en oxygène minimale des gaz en sortie catalyseur = 3%
aux critères suivants pour une stratégie de niveau 2 surcalibré :
- température maximale collecteur d'échappement =830°C
- exotherme catalyseur maximal = 200°C
- température sortie catalyseur maximale = 730°C
- température interne catalyseur maximale = pas de valeur maximale
- teneur en oxygène minimale des gaz en sortie catalyseur = 2%;

Avec les résultats suivants :

| | |
|---|---|
| **Cycles EUDC** | - température en entrée du FAP de 600°C atteinte en 200 sec. au lieu de 600 sec. avec l'aide à la RG standard |
| | - température en entrée du FAP de 650°C atteinte en 220 sec. alors que cette température n'est jamais atteinte avec l'aide à la RG standard |
| **Cycle Ville** | - température en entrée du FAP de 500°c atteinte en 100 sec. au lieu de 150 sec. avec l'aide à la RG standard |
| | - température en entrée FAP de 550°C atteinte en 105 sec. au lieu de 300 sec. avec l'aide à la RG standard |
| | - température en entrée FAP de 600°C atteinte en 150 sec. alors que cette température n'est jamais atteinte avec l'aide à la RG standard |

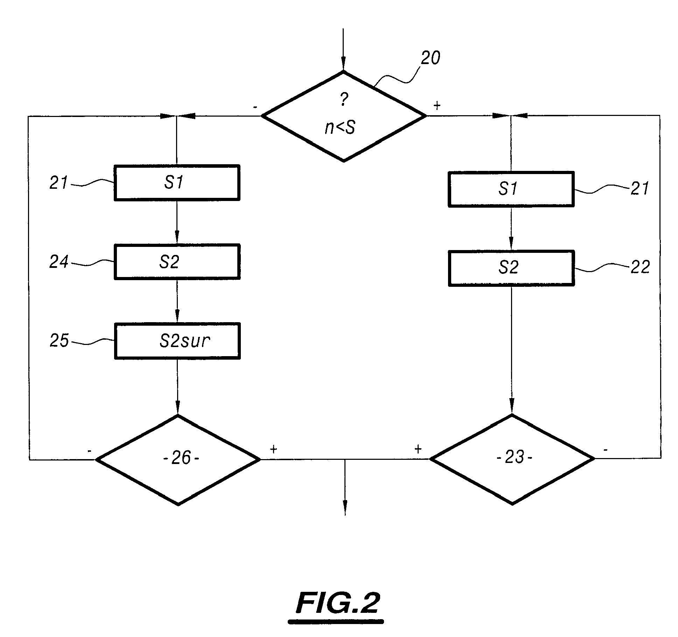

On a illustré sur la figure 2, un organigramme illustrant le fonctionnement de ce système d'aide à la régénération.

Celui-ci débute par une phase d'acquisition du nombre de régénérations incomplètes des moyens de dépollution à partir des différentes informations mentionnées précédemment.

Ce nombre n est ensuite comparé par le superviseur, en 20, à des valeurs de seuil.

Si le nombre est inférieur aux valeurs de seuil, la stratégie de régénération met en oeuvre une stratégie dite de niveau 1, en 21, associée à une stratégie dite de niveau 2, en 22, jusqu'à la fin de la régénération telle que déterminée en 23.

Par contre, si le nombre est supérieur aux valeurs de seuil, le superviseur met en oeuvre une seconde stratégie de régénération comportant une stratégie de niveau 1, en 21, associée à une séquence alternant des stratégies de niveau 2 et de niveau 2 surcalibré, telles que désignées par 24 et 25 sur cette figure, jusqu'à la fin de la régénération telle que détectée en 26.

Il va de soi bien entendu que différents modes de réalisation de ce système peuvent être envisagés et que les moyens de dépollution peuvent comporter un filtre à particules, comme par exemple un filtre à particules catalysé ou encore un piège à NOx.

De plus, le carburant peut également comporter un additif destiné à se déposer avec les particules auquel il est mélangé, sur les moyens de dépollution pour faciliter leur régénération.

Ces moyens de dépollution peuvent également être imprégnés avec une formulation SCR assurant une fonction d'oxydation CO/HC de façon classique.

D'autres moyens formant catalyseur d'oxydation peuvent être envisagés et les moyens de dépollution et les moyens formant catalyseur d'oxydation peuvent être intégrés dans un seul et même élément, notamment sur le même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie, par exemple par un additif mélangé au carburant.

## Revendications

1. Système d'aide à la régénération de moyens de dépollution (1), associé à des moyens formant catalyseur d'oxydation, intégrés dans une ligne d'échappement (3) d'un moteur Diesel (4) de véhicule automobile placée en sortie du collecteur d'échappement du moteur, dans lequel le moteur (4) est associé à des moyens d'alimentation (7) à rampe commune d'injection de carburant dans les cylindres de celui-ci, selon au moins une post-injection et adaptés pour mettre en oeuvre, à isocouple, par modification de paramètres de contrôle du fonctionnement du moteur, au moins deux stratégies de régénération dont une première stratégie de régénération comportant des stratégies dites de niveau 1 et de niveau 2 et une seconde stratégie de régénération comportant des stratégies de niveau 1 et une séquence alternant des stratégies de niveau 2 et de niveau 2 surcalibré, la statégie de niveau 2 remplissant les critères suivants :
- température maximale colllecteur d'échappement =800°C
- exotherme catalyseur maximal =150°C
- température sortie catalyseur maximale =710°C
- température interne catalyseur maximale =760°C
- teneur en oxygène minimale des gaz en sortie catalyseur =3%, et la stratégie de niveau 2 surcalibré remplissant les critères suivants :
- température maximale collecteur d'échappement =830°C
- exotherme catalyseur maximal =200°C
- température sortie catalyseur maximale =730°C
- température interne catalyseur maximale =pas de valeur maximale
- teneur en oxygène minimale des gaz en sortie catalyseur =2%, permettant des niveaux thermiques différents dans la ligne d'échappement, **caractérisé en ce qu'**il comporte des moyens (8) de détermination du nombre de régénérations incomplètes des moyens de dépollution et des moyens (8) de comparaison de celui-ci à des valeurs de seuil prédéterminées, pour mettre en oeuvre la première stratégie de régénération pour un nombre inférieur aux valeurs de seuil ou la seconde stratégie pour un nombre supérieur aux valeurs de seuil.

2. Système selon la revendication 1, **caractérisé en ce que** les moyens de dépollution comprennent un filtre à particules.

3. Système selon la revendication 2, **caractérisé en ce que** le filtre à particules est catalysé.

4. Système selon l'une quelconque des revendications précédentes, **caractérisé en ce que** les moyens de dépollution comprennent un piège à NOx.

5. Système selon l'une quelconque des revendications précédentes, **caractérisé en ce que** le carburant comporte un additif destiné à se déposer avec les particules auxquelles il est mélangé, sur les moyens de dépollution pour faciliter leur régénération.

6. Système selon l'une quelconque des revendications précédentes, **caractérisé en ce que** le carburant comporte un additif formant piège à NOx.

7. Système selon l'une quelconque des revendications précédentes, **caractérisé en ce que** les moyens de dépollution sont imprégnés avec une formulation SCR, assurant une fonction d'oxydation CO/HC.

8. Système selon l'une quelconque des revendications précédentes, **caractérisé en ce que** le moteur (4) est associé à un turbocompresseur (5,6).

## Claims

1. System for aiding the regeneration of pollution control means (1), associated with oxidation catalyst forming means, integrated in an exhaust line (3) of a diesel engine (4) of a motor vehicle, placed at the outlet of the engine exhaust manifold, in which the engine (4) is associated with common rail feed means (7) for injecting fuel into the cylinders thereof, according to at least one post-injection and suitable for implementing, at isotorque, by modifying engine operating control parameters, at least two regeneration strategies including a first regeneration strategy comprising strategies called level 1 and level 2 strategies and a second regeneration strategy comprising level 1 strategies and a sequence alternating level 2 and supercalibrated level 2 strategies, the level 2 strategy meeting the following criteria:
- maximum exhaust manifold temperature = 800°C
- maximum catalyst exotherm = 150°C
- maximum catalyst outlet temperature = 710°C
- maximum catalyst internal temperature = 760°C
- minimum oxygen content of catalyst outlet gases = 3%
and the supercalibrated level 2 strategy meeting the following criteria:
- maximum exhaust manifold temperature = 830°C
- maximum catalyst exotherm = 200°C
- maximum catalyst outlet temperature = 730°C
- maximum catalyst internal temperature = no maximum value
- minimum oxygen content of catalyst outlet gases = 2%
permitting different temperature levels in the exhaust line, **characterized in that** it comprises means (8) for determining the number of incomplete regenerations of the pollution control means and means (8) for comparing the said number with predefined threshold values, for implementing the first regeneration strategy for a number lower than the threshold values or the second strategy for a number higher than the threshold values.

2. System according to Claim 1, **characterized in that** the pollution control means comprise a particulate filter.

3. System according to Claim 2, **characterized in that** the particulate filter is catalysed.

4. System according to any one of the preceding claims, **characterized in that** the pollution control means comprise a NOx trap.

5. System according to any one of the preceding claims, **characterized in that** the fuel comprises an additive for being deposited with the particulates with which it is mixed, on the pollution control means for facilitating their regeneration.

6. System according to any one of the preceding claims, **characterized in that** the fuel comprises a NOx trap forming additive.

7. System according to any one of the preceding claims, **characterized in that** the pollution control means are impregnated with an SCR formulation, providing a CO/HC oxidation function.

8. System according to any one of the preceding claims, **characterized in that** the engine (4) is associated with a turbocharger (5, 6).

## Patentansprüche

1. Hilfssystem zum Regenerieren von Reinigungsmitteln (1), verbunden mit Mitteln, die einen Oxidationskatalysator bilden und in eine Auspuffanlage (3) eines Kraftfahrzeug-Dieselmotors (4) integriert sind, die am Ausgang des Auspuffsammlers des Motors angeordnet ist, bei dem der Motor (4) Versorgungsmitteln (7) mit Common-Rail-Kraftstoffeinspritzung der Zylinder des Motors zugeordnet ist, gemäß mindestens einer Nacheinspritzung, die dazu geeignet sind, mit gleichem Moment durch Ändern von Steuerparametern des Betriebs des Motors mindestens zwei Regenerierungsstrategien umzusetzen, wobei eine erste Regenerierungsstrategie Strategien des Niveaus 1 und des Niveaus 2 umfasst und eine zweite Regenerierungsstrategie Strategien des Niveaus 1 und eine die Strategien des Niveaus 2 und des überkalibrierten Niveaus 2 abwechselnde Folge umfasst, wobei die Strategie von Niveau 2 die folgenden Kriterien erfüllt:
- maximale Auspuffsammlertemperatur = 800°C
- maximale Katalysatorwärmeerzeugung = 150°C
- maximale Temperatur am Katalysatorausgang = 710°C
- maximale interne Temperatur des Katalysators = 760°C
- Mindestsauerstoffgehalt der Gase am Ausgang des Katalysators = 3%,
und die überkalibrierte Strategie von Niveau 2 die folgenden Kriterien erfüllt:
- maximale Auspuffsammlertemperatur = 830°C
- maximale Katalysatorwärmeerzeugung = 200°C
- maximale Temperatur am Katalysatorausgang = 730°C
- maximale interne Temperatur des Katalysators = kein Höchstwert
- Mindestsauerstoffgehalt der Gase am Ausgang des Katalysators = 2%,
die es erlauben, unterschiedliche Wärmeniveaus in der Auspuffanlage zu erzielen, **dadurch gekennzeichnet, dass** es Mittel (8) zum Bestimmen der Anzahl unvollständiger Regenerierungen der Reinigungsmittel sowie Mittel (8) zum Vergleich dieses Werts mit vorbestimmten Schwellwerten umfasst, um für eine unter den Schwellwerten liegende Anzahl die erste Regenerierungsstrategie oder für eine über den Schwellwerten ligende Anzahl die zweite Strategie umzusetzen.

2. System nach Anspruch 1, **dadurch gekennzeichnet, dass** die Reinigungsmittel ein Partikelfilter aufweisen.

3. System nach Anspruch 2, **dadurch gekennzeichnet, dass** das Partikelfilter katalysiert ist.

4. System nach einem der vorhergehenden Ansprüche, **dadurch gekennzeichnet, dass** die Reinigungsmittel eine NOx-Falle aufweisen.

5. System nach einem der vorhergehenden Ansprüche, **dadurch gekennzeichnet, dass** der Kraftstoff einen Zusatz enthält, der dazu bestimmt ist, sich mit den Partikeln, mit welchen er gemischt wird, auf den Reinigungsmitteln (1) abzulagern, um ihr Regenerieren zu erleichtern.

6. System nach einem der vorhergehenden Ansprüche, **dadurch gekennzeichnet, dass** der Kraftstoff einen Zusatz enthält, der eine NOx-Falle bildet.

7. System nach einem der vorhergehenden Ansprüche, **dadurch gekennzeichnet, dass** die Reinigungsmittel mit einer SCR-Formulierung imprägniert sind, die eine CO/HC-Oxidationsfunktion sicherstellt.

8. System nach einem der vorhergehenden Ansprüche, **dadurch gekennzeichnet, dass** der Motor (4) mit einem Turbokompressor (5, 6) verbunden ist.
